# EUROPÄISCHE PATENTSCHRIFT

(11) **EP 2 923 135 B1**
(45) Veröffentlichungstag und Bekanntmachung des Hinweises auf die Patenterteilung: **28.12.2016**
(21) Anmeldenummer: 13792711.7
(22) Anmeldetag: 21.11.2013
(51) Int. Cl.: F16L 55/163

(54) **DICHTUNGSINNENMANSCHETTE MIT VERBESSERTEM ARRETIERUNGSMECHANISMUS**
INNER SEAL COLLAR WITH IMPROVED LOCKING MECHANISM
MANCHETTE INTÉRIEURE DE GARNITURE D'ÉTANCHÉITÉ À MÉCANISME D'ARRÊT AMÉLIORÉ

(30) Priorität: 23.11.2012 DE 102012111341; 23.11.2012 DE 202012012667 U
(43) Veröffentlichungstag der Anmeldung: 30.09.2015
(73) Patentinhaber: GRAF Patentverwertungs GbR, 78073 Bad Dürrheim (DE)
(72) Erfinder: GRAF, Jürgen, 78073 Bad Dürrheim (DE); GRAF, Joachim, 78073 Bad Dürrheim (DE)
(74) Vertreter: Westphal, Mussgnug & Partner Patentanwälte mbB
(86) Internationale Anmeldenummer: PCT/EP2013/074424
(87) Internationale Veröffentlichungsnummer: WO 2014/079955

(56) Entgegenhaltungen:
- DE-A1- 4 401 318
- DE-A1-102009 047 863
- DE-C1- 19 544 877
- DE-U1-202010 013 588

## Beschreibung

Die Erfindung betrifft eine Dichtungsinnenmanschette zum Einsetzen in Rohre, um dortige Leckstellen abzudichten, gemäß den Merkmalen des Oberbegriffs des Anspruchs 1.

Solche Dichtungsinnenmanschetten sind hinlänglich bekannt und beispielsweise in DE 44 01 318 C2 beschrieben. Mit Hilfe von solchen Dichtungsinnenmanschetten können Undichtigkeitsstellen von z. B. unterirdisch verlegten Rohren aus Beton oder einem anderen Werkstoff ohne Grabarbeiten repariert werden. Hierfür wird in das zu reparierende, undichte Rohr die Dichtungsmanschette bis zur Stelle der Undichtigkeit eingeschoben. Dabei ist zunächst die Dichtungsinnenmanschette spiralig zusammengebogen, so dass sie einen kleineren Durchmesser als das abzudichtende Rohr hat. Ist die Dichtungsmanschette bis zu der undichten Stelle des zu reparierenden Rohres verbracht, wird mittels einer mechanischen Montiereinrichtung die Dichtungsinnenmanschette so lange aufgeweitet, bis sie sich unter Zusammenpressen der Dichtungsringe sehr eng an die Rohrinnenwand angelegt haben. Mittels einer Arretierungsvorrichtung, die ein mit einer Zahnreihe kämmendes Spannritzel und einen in dessen Zähne eingreifenden, federnden Sperrriegel aufweist, wird die Dichtungsinnenmanschette in ihrer aufgeweiteten Stellung gehalten.

Eine hierzu verbesserte Arretierungsvorrichtung schlägt die EP 0 805 932 B1 vor. Dort ist eine Dichtungsinnenmanschette offenbart mit einer Arretierungsvorrichtung, die sehr kleine Rastschritte gestattet und damit nach erfolgter Aufweitung ein festes, dauerhaftes Anliegen an der Rohrinnenwand bei hoher Presswirkung auf die Dichtorgane gewährleistet. Die verbesserte Arretierungsvorrichtung verfügt hierfür über einen am innen liegenden Bandende in Umfangsrichtung angeordneten Schlitz, an dessen beiden gegenüberliegenden Längskanten jeweils eine Zahnreihe angeordnet ist. In dem Schlitz sind zwei Spannritzel vorgesehen, von denen jedes mit einer der beiden Zahnreihen kämmt und zugleich von einem gemeinsamen Sperrritzel als Rastorgan beaufschlagt wird. Über eine Spannfeder wird das Sperrritzel in den Zwischenraum zwischen die beiden Spannritzel gedrückt.

Eine Dichtungsmanschette mit einer solchen Arretierungsvorrichtung ist hinsichtlich der erzielbaren Kräftebelastung verbesserungswürdig.

Die vorliegende Erfindung hat deshalb das Ziel, die bekannten Dichtungsinnenmanschetten so weiterzubilden, dass die Arretierungsvorrichtung höhere Kräfte aufnehmen kann, also schwieriger zu entriegeln ist als bisher.

Diese Aufgabe wird durch eine Dichtungsmanschette mit den Merkmalen des Anspruchs 1 gelöst.

Weiterbildungen der Erfindung sind Gegenstand der Unteransprüche.

Die Erfindung besteht im Wesentlichen darin, zwei Zahnreihen vorzusehen, an denen jeweils ein eigenes Spannritzel mit zugehörendem Sperrelement eingreift. Dabei ist jedes der den beiden Spannritzel angeordnete Sperrelement als Sperrritzel ausgestaltet. Durch die Verwendung von zwei Zahnreihen und zugeordneten Spannritzeln kann der Arretierungsmechanismus doppelte Kräfte über die Zahnstange aufnehmen, weil nicht nur jedes der beiden Spannritzel sondern zusätzlich auch jedes der mit den Spannritzel kämmenden Sperrritzel in die zugeordnete Zahnreihe eingreift und mit dieser kämmt.

Zusätzlich ist von Vorteil, dass die Sperrkräfte der Spannritzel zur Zahnstange hin wirken und hierdurch eine hohe statische Stabilität der gesamten Anordnung gewährleistet ist. Auf Grund der Verwendung eines Sperrritzels in Zusammenwirken mit einem Spannritzel ist eine halbe Zahnteilung im Vergleich zur Verwendung eines anderen Sperrelementes, wie z.B. eine Sperrklinke, erreicht. Vorteilhaft dabei ist, dass der Weg eines Zurückrutschens der aufgeweiteten Dichtungsinnenmanschette nur um eine halbe Zahnbreite möglich ist.

Die erfindungsgemäße Dichtungsinnenmanschette wird anhand von mehreren Ausführungsbeispielen im Zusammenhang mit Figuren nachfolgend näher erläutert. Es zeigen:
- Figur 1: den perspektivischen Blick in einen Teil einer Dichtungsinnenmanschette von außen auf die dort angeordnete Arretierungsvorrichtung gemäß einem ersten Ausführungsbeispiel einer Dichtungsinnenmanschette,
- Figur 2: eine ähnliche Ansicht wie Figur 1 gemäß einem zweiten Ausführungsbeispiel der Dichtungsinnenmanschette,
- Figur 3: die Arretierungsvorrichtung von Figur 1 im Ausschnitt entlang der gepunkteten Schnittlinie von Figur 1,
- Figur 4: eine Schnittansicht entlang der Schnittlinie I-I von Figur 3,
- Figur 5: den Ausschnitt eines dritten Ausführungsbeispieles einer Dichtungsinnenmanschette nach der Erfindung mit verhältnismäßig breiter Zahnstange und dort angebrachten zwei Niederhaltern,
- Figur 6: einen Ausschnitt einer Dichtungsinnenmanschette ähnlich der Darstellungen von Figur 3 und 4, jedoch gemäß eines vierten Ausführungsbeispieles,
- Figur 7: einen Ausschnitt einer Dichtungsinnenmanschette ähnlich der Darstellung von Fig. 3 und 4, jedoch gemäß eines fünften Ausführungsbeispieles,
- Figur 8: einen Ausschnitt einer Dichtungsinnenmanschette gemäß einem sechsten Ausführungsbeispiel,
- Figur 9: einen Ausschnitt einer Dichtungsinnenmanschette gemäß einem siebten Ausführungsbeispiel,
- Figur 10: einen Ausschnitt einer Dichtungsinnenmanschette gemäß einem achten Ausführungsbeispiel und
- Figur 11: einen Ausschnitt einer Dichtungsinnenmanschette gemäß einem neunten Ausführungsbeispiel.

In den nachfolgenden Figuren bezeichnen, sofern nicht anders angegeben, gleiche Bezugszeichen gleiche Teile mit gleicher Bedeutung.

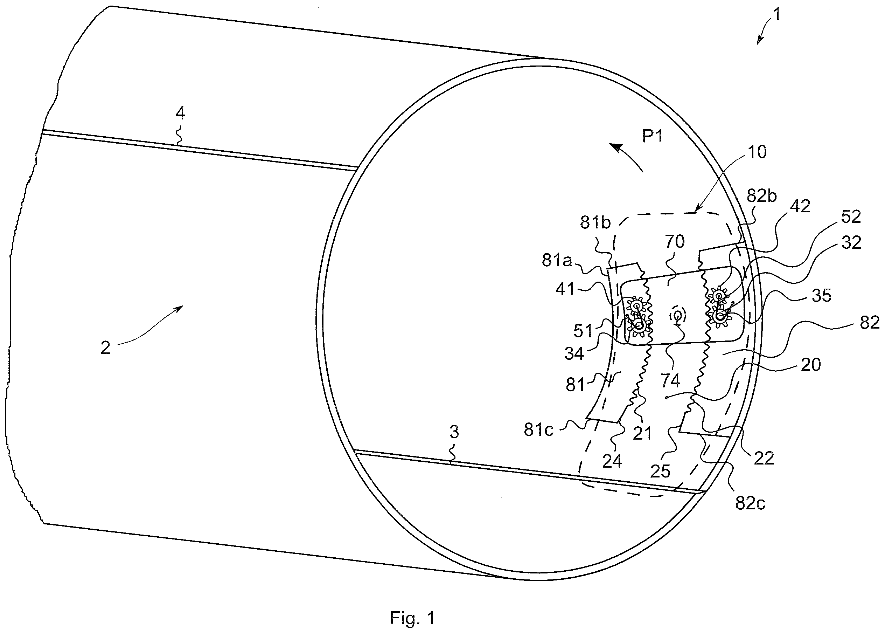

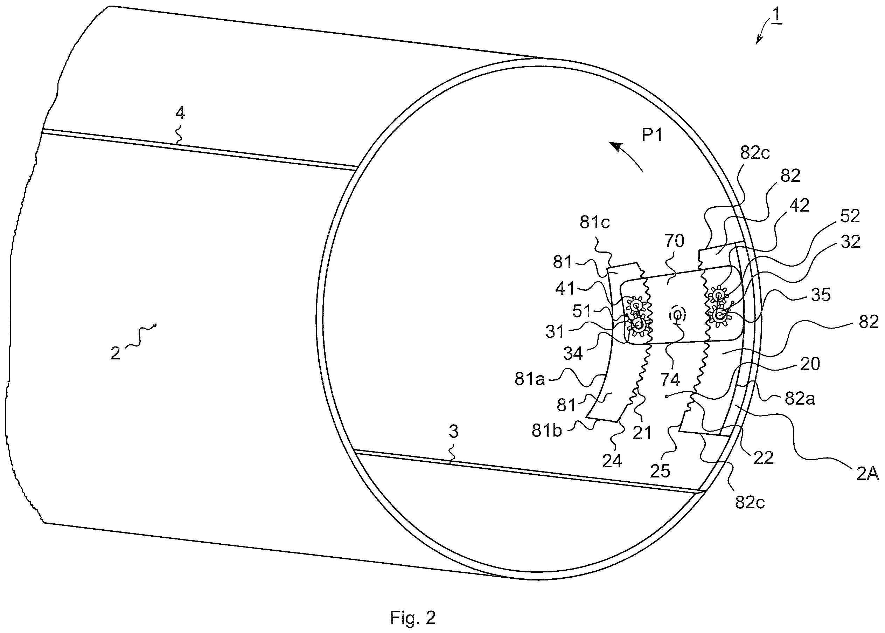

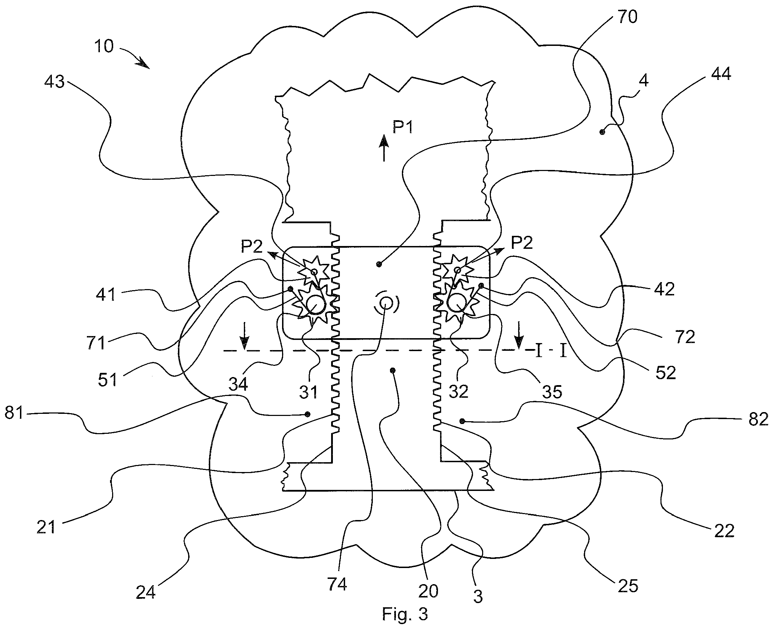

In Figur 1 ist in perspektivischer Darstellung ein Teil einer Dichtungsinnenmanschette 1 gezeigt. Der Betrachter blickt auf ein zusammengewickeltes Band 2, das vorzugsweise aus Stahlblech oder dergleichen besteht. Das Band 2 weist in dem dargestellten, zusammengerollten Zustand ein innen liegendes Bandende bzw. Bandteil 3 und ein außen liegendes Bandende bzw. Bandteil 4 auf. Damit das Band 2 in diesem zusammengerollten Zustand verbleibt und sich im Durchmesser nicht verkleinern kann, ist eine besondere Arretierungsvorrichtung 10 vorgesehen, die nachfolgend im Detail beschrieben werden wird. Die in Figur 1 dargestellte Arretierungsvorrichtung 10 ist in dem dort strichliert markierten Bereich in Figur 3 noch einmal in vergrößerter Darstellung und in Draufsicht zu sehen. Wesentlicher Bestandteil der Arretierungsvorrichtung 10 ist eine Zahnstange 20 mit einer ersten Zahnreihe 21 und einer gegenüber liegenden, zweiten Zahnreihe 22. Die Zahnstange 20 ist, wie besonders deutlich die Figur 1 zeigt, mit ihren beiden Enden an das innen liegende Bandteil 3 einstückig angeformt, indem links von der ersten Zahnreihe 21 eine schlitzförmige erste Ausnehmung 81 und rechts von der zweiten Zahnreihe 22 eine ähnliche Ausnehmung 82 angeordnet ist. Allerdings ist die zweite Ausnehmung in dem Ausführungsbeispiel von Figur 1 zur offenen Seite des zusammengewickelten Bandes 2 hin offen gestaltet. In Figur 2 ist dagegen die Ausnehmung 82 tatsächlich in ähnlicher Weise wie die Ausnehmung 81 gestaltet. Dies bedeutet, dass im Ausführungsbeispiel von Figur 2 auch die Ausnehmung 82 durch einen Wandabschnitt 2A des Bandes 2 zur offenen Stirnseite hin begrenzt ist.

Die Zahnstange 20 ist in beiden Ausführungsbeispielen von Figur 1 und Figur 2 in Umfangsrichtung des aufgewickelten Bandes 2 gesehen ein integraler Bestandteil des innen liegenden Bandteiles 3. Dabei verläuft die erste Zahnreihe 21 entlang einer ersten Längskante 24 und die zweite Zahnreihe 22 entlang einer zweiten Längskante 25 der Zahnstange 20. Die beiden Längskanten 24, 25 und damit die beiden Zahnreihen 21, 22 sind parallel zueinander ausgerichtet.

Die Zahnstange 20 kann mit ihren beiden Zahnreihen 21, 22 beispielsweise eine Länge aufweisen, die etwa von einem Achtelkreis bis etwa einen Halbkreis oder etwas mehr reicht. Es können hier jedoch auch unterschiedliche Längen vorgesehen werden. Dies hängt in entscheidendem Maß davon ab, welchen Außendurchmesser die Dichtungsinnenmanschette 1 aufweisen muss, um ein entsprechendes, defektes Rohr abdichten zu können.

Wie aus Figur 1 ersichtlich, ist die links dargestellte, schlitzförmige Ausnehmung 81 auf ihrer rechten Seite von der erwähnten ersten Längskante 24, die die erste Zahnreihe 21 der Zahnstange 20 trägt, begrenzt. Auf der gegenüber liegenden Seite ist die Ausnehmung 81 von einer Längskante 81a begrenzt, die keine Zahnreihe trägt. Diese Längskante 81a ist an ihrem oberen und unteren Ende über im rechten Winkel verlaufende Querkanten 81b und 81c mit der ersten Längskante 24 verbunden.

Die rechte Ausnehmung 82 verfügt über die zweite Längskante 25 der Zahnstange 20, welche die zweite Zahnreihe 22 trägt. Im Unterschied zu der Ausnehmung 81 ist in Figur 1 die Ausnehmung 82 nach rechts hin offen, wobei die zweite Längskante 25 mit der zweiten Zahnreihe 22 an ihrem oberen Ende und unteren Ende rechtwinklig in zwei Querkanten 82b, 82c übergeht.

Betrachtet man das Ausführungsbeispiel von Figur 2, so ist dort die rechte Ausnehmung 82, wie erwähnt, ähnlich wie die linke Ausnehmung 81 gestaltet. Dies bedeutet, dass der zweiten Längskante 25 der Zahnstange 20 mit der dort angeordneten zweiten Zahnreihe 22 eine gerade verlaufende Längskante 82a gegenüber liegt, die keine Zahnreihe aufweist. Als Ergebnis ist, wie in Figur 2 dargestellt, noch ein schmaler Bandabschnitt bzw. Steg parallel zur Längskante 82a des Bandes 2 vorhanden. Dieser Bereich ist mit dem Bezugszeichen 2A markiert.

In den beiden Ausnehmungen 81 und 82 sind in besonderer Art und Weise jeweils zwei Zahnräder platziert. So ist in der ersten Ausnehmung 81 ein erstes Spannritzel 31, welches mit der ersten Zahnreihe 21 kämmt, angeordnet. Hierfür sitzt das erste Spannritzel 31 auf einem Achsstift 34 auf, welcher auf dem außen liegenden Bandteil 4 festgelegt ist. Dieses Festlegen kann beispielsweise durch Nieten oder Schweißen geschehen. Andere Verbindungsmittel sind ebenfalls möglich.

Im Ausführungsbeispiel der Figuren 1 bis 3 hat das erste Spannritzel zum Beispiel neun Zähne, die mit der ersten Zahnreihe 21 bei Drehung des ersten Spannritzels 31 kämmen können. Diesem ersten Spannritzel 31 ist ein erstes Sperrritzel 41 zugeordnet. Dieses erste Sperrritzel 41 ist fliegend gelagert. Dies bedeutet, dass die Achse des Sperrritzels 41 nicht festgelegt ist. Vielmehr wird dieses erste Sperrritzel 41 über ein Federelement 51 gegen das erste Spannritzel 31 gedrückt, sodass das erste Sperrritzel 41 sowohl mit dem Spannritzel 31 als auch mit der ersten Zahnreihe 21 in Eingriff gehalten ist. Das Federelement 51 ist vorliegend eine Spannfeder, die U-förmig den Achsstift 34 umschlingt und mit einem Ende in eine zentrische Bohrung des Sperrritzels 41 eingreift. Das andere Ende ist direkt oder indirekt am außen liegenden Bandteil 4 befestigt.

Im vorliegenden Ausführungsbeispiel erfolgt das Festlegen dieses anderen Endes des Federelementes 51, also der Spannfeder, dadurch, dass in einer Niederhalteplatte 70 eine Bohrung 71 platziert ist, in der das abgewinkelte Ende des Federelementes 51 eingreifen kann. Diese Niederhalteplatte 70 ist beispielsweise rechteckförmig gestaltet und übergreift die erste Zahnreihe 21 sowie das erste Spannritzel 31 und das erste Sperrritzel 41 sowie das Federelement 51. Die Niederhalteplatte 70 ist feststehend mit dem außen liegenden Bandteil 4 in Verbindung. Dies erfolgt im dargestellten Ausführungsbeispiel dadurch, dass der am außen liegenden Bandende 4 befestigte Achsstift 34 auch an der Niederhalteplatte 70 festgelegt ist. So kann der Achsstift 34 nicht nur an dem außen liegenden Bandende 4 festgenietet sein, sondern auch an der Niederhalteplatte 70. Alternativ ist es auch möglich, die Niederhalteplatte 70 mit dem außen liegenden Bandende zu verschrauben.

Wie aus den Figuren 1 bis 3 ersichtlich, ist an der zweiten Zahnreihe 22 in ähnlicher Weise ein zweites Spannritzel 32 mit einem zweiten Sperrritzel 42 und ein zweites Federelement 52 in Form einer Spannfeder angeordnet. Die Enden dieses zweiten Federelementes 52 sind wiederum in eine Bohrung des zweiten Federelements 52 und in eine entsprechende Bohrung 72 der Niederhalteplatte 70 eingelegt. Das Sperrelement 42 umschlingt dabei in einem Winkel von etwa 180° den Achsstift 35, um den das zweite Spannritzel 32 rotieren kann. Auch dieser Achsstift 35 kann als Niete oder Schraube ausgebildet sein.

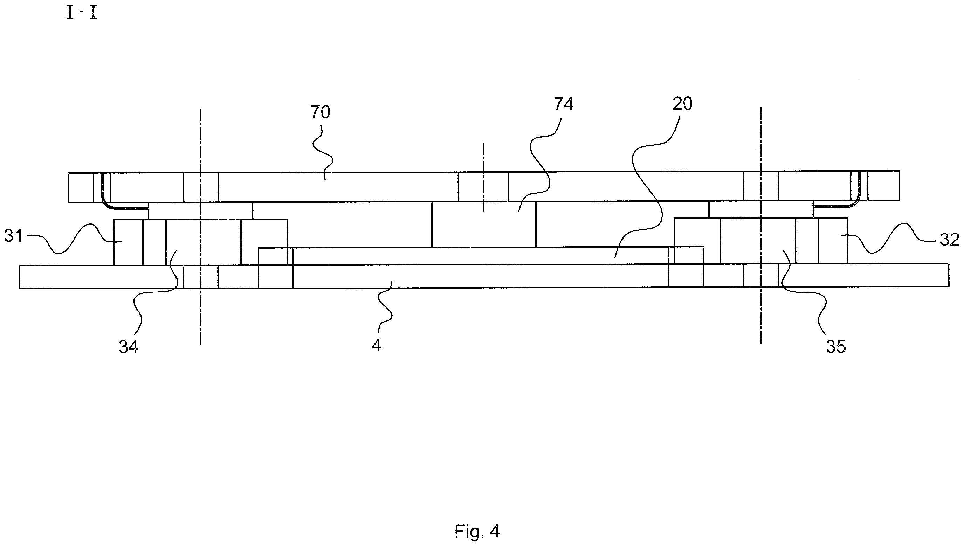

Die Niederhalteplatte 70 dient dazu, die Zahnstange 20 beim Spannvorgang niederzudrücken. Hierfür kann auf der der Zahnstange 20 zugewandten Seite der Niederhalteplatte 70 ein Niederhalteelement 74, beispielsweise in Form eines Kunststoffnoppens, angebracht sein. An diesem Niederhalteelement 74 gleitet die Zahnstange 20 beim Aufweiten der Dichtungsinnenmanschette 1 entlang und wird niedergedrückt. Besonders deutlich ist dies in Figur 4 erkennbar, die eine Schnittansicht von Figur 3 entlang der dortigen Schnittlinie I-I zeigt. Es ist deutlich zu erkennen, dass das Niederhalteelement 74 auf der Zahnstange 20 aufsitzt.

In den vorgestellten Ausführungsbeispielen der Figuren 1 bis 3 haben die jeweiligen Spannritzel 31, 32 eine höhere Zähnezahl als die beiden Sperrritzel 41, 42. Dies kann so sein, muss aber nicht.

Die Funktionsweise einer solchen Arretierungsvorrichtung 10 ist folgende.

Bei der Montage der Dichtungsinnenmanschette 1 in einem abzudichtenden Rohr wird zunächst die Dichtungsinnenmanschette 1 mit einem verkleinerten Durchmesser und damit im etwas zusammengerollten Zustand in das abzudichtende Rohr gebracht. Hierfür sorgt ein Montagewagen, der die Dichtungsinnenmanschette 1 an die betreffende Stelle des abzudichtenden Rohres verbringt. An der abzudichtenden Stelle angelangt, sorgt der Montagewagen dafür, dass die Dichtungsinnenmanschette aufgeweitet wird. Hierfür wird das innen liegende Bandteil 3 in Bezug auf das außen liegende Bandteil 4 entlang der Pfeilrichtung P1 bewegt. Eine Bewegungsrichtung entlang des Pfeils P1 ist möglich, weil die zwei fliegend gelagerten Sperrritzel 41, 42 entlang der in Figur 3 gezeigten Pfeile P2 nach außen und damit zueinander weggerichtet ausweichen und dadurch sich die beiden Spannritzel 31, 32 aufgrund des nach oben Schiebens der beiden Zahnreihen 21, 22 um ihre Achsstifte 34, 35 frei drehen können. Eine Bewegung entgegen der Pfeilrichtung P1 ist dagegen praktisch nahezu nicht mehr möglich, weil hier die beschriebene Arretierungsvorrichtung 10 sperrt. In diesem Fall ziehen die beiden Spannfedern 51, 52 die beiden Sperrritzel 41, 42 in Richtung zu den Spannritzeln 31, 32 und stehen deshalb mit diesen ebenso in Eingriff, wie mit den beiden Zahnreihen 21, 22 der Zahnstange 20. Eine Bewegung des inneren Bandteiles 3 entgegen der Pfeilrichtung P1 ist deshalb wirksam blockiert.

Aufgrund der Tatsache, das an der Zahnstange 70 zwei separate Spannritzel 31, 32 mit jeweils eigens zugehörenden Sperrritzel 41, 42 in Eingriff stehen, ist im Vergleich zu herkömmlichen Arretierungsvorrichtungen eine erhöhte Arretierkraft erreicht. Die hohen Arretierkräfte rühren daher, dass die Arretierungsvorrichtung vier Zahnräder, also die beiden Spannritzel 31, 32 und die zugehörenden Sperrritzel 41, 42 aufweist, die alle in Sperrrichtung mit der Zahnstange 20 in Eingriff stehen.

Aufgrund der Tatsache, dass an der Zahnstange 20 links und rechts die Sperrkräfte des Spannritzels 31 und des zugehörenden Sperrritzels 41 an der rechten Zahnreihe 22 das Spannritzel 32 und das zugehörende Sperrritzel 42 angreifen, wirken die Sperrkräfte dieser Zahnräder vorteilhafterweise zueinander, so dass eine statisch erhöhte Stabilität der gesamten Anordnung gegeben ist. Im Gegensatz zu der in der Beschreibungseinleitung zitierten EP 0 805 932 B1 wirken bei der dort beschriebenen Dichtungsinnenmanschette die Sperrkräfte der beiden Spannritzel auseinander.

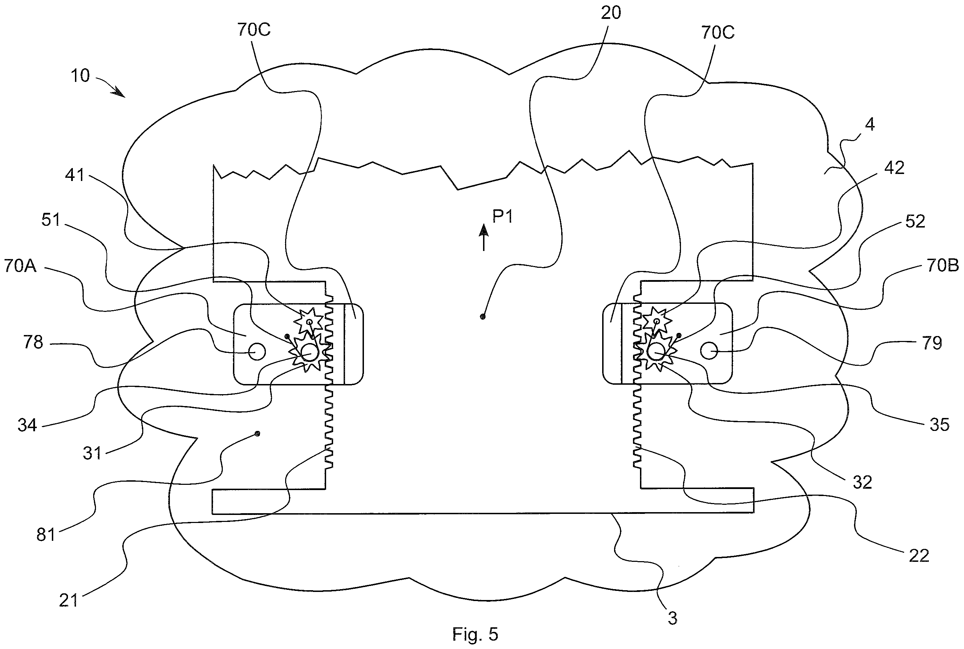

Figur 5 zeigt ein drittes Ausführungsbeispiel einer Dichtungsinnenmanschette im Bereich der Arretierungsvorrichtung 10. Im Unterschied zu den vorgenannten Ausführungsbeispielen ist die Zahnstange 20 jetzt deutlich breiter und die Niederhalteplatte zweiteilig ausgebildet. Dies bedeutet, dass nicht nur eine Niederhalteplatte vorgesehen ist, die die gesamte Zahnstange 20 und die zugehörenden Spannritzel 31, 32 und Sperrritzel 41, 42 übergreift. Vielmehr ist jeweils eine kleinere Niederhalteplatte 70A vorgesehen, die nur einen Teil der Zahnstange 20 übergreift und über einen Bolzen 78 an dem außen liegenden Bandteil 40 festgelegt, z. B. festgenietet oder festgeschraubt ist. Dieser Bolzen 78 befindet sich, wie Figur 5 zeigt, in der Ausnehmung 81 für die dort links dargestellte Niederhalteplatte 70A. Die Niederhalteplatte 70B übergreift ein linkes Teil der Zahnstange 20 und ist über einen Bolzen 78 an dem außen liegenden Bandteil 4 festgelegt, z. B. festgenietet oder festgeschraubt. Dieser Bolzen 78 befindet sich, wie Figur 4 zeigt, in der Ausnehmung 81 für die dort links dargestellte Niederhalteplatte 70A. Zusätzlich ist der die Zwischenstange 20 übergreifende Bereich der Niederhalteplatten 70A, 70B jeweils mit einer Abprägung 70C versehen, die zur Zahnstange 20 nach unten geboten ist und so als Niederhalter für die Zahnstange 20 fungiert.

Eine ähnliche Niederhalteplatte 70B übergreift in ähnlicher Weise einen Teil der zweiten Zahnreihe 22 und das dortige zweite Spannritzel 32 und das zugehörende zweite Sperrritzel 42. Über einen Bolzen 79 ist diese zweite Niederhalteplatte 70B wiederum an dem außen liegenden Bandteil 4 festgelegt, d. h. festgenietet oder festgeschraubt. Im Übrigen sind die in Figur 5 dargestellten beiden Niederhalteplatten 70A und 70B wiederum mit Achsstiften 34, 35 an das außenliegende Bandende 4 der Dichtungsinnenmanschette befestigt.

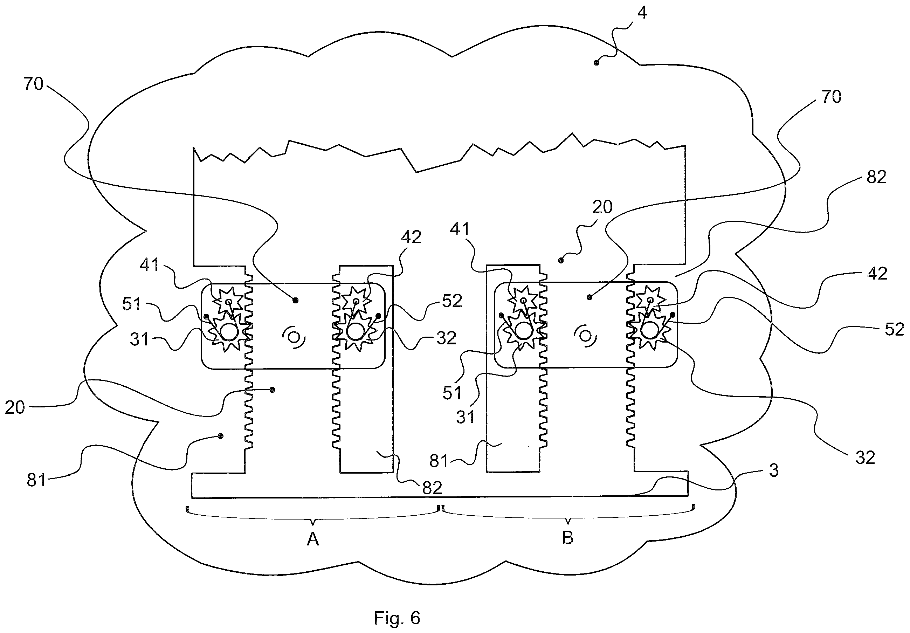

Das in Figur 6 dargestellte dritte Ausführungsbeispiel ist ähnlich zu dem Ausführungsbeispiel der Figuren 1 bis 3, allerdings sind dort in den Bereichen A und B zwei parallel zueinander angeordnete identische Arretierungsvorrichtungen 10 platziert. Die bereits bekannten Bezugszeichen werden auch in Figur 6 wieder verwendet, allerdings in doppelter Verwendung.

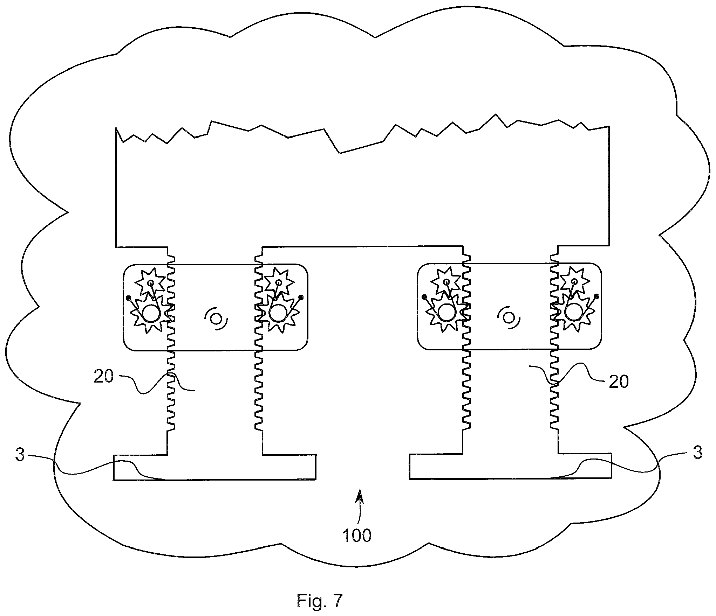

In Figur 7 ist noch ein weiteres Ausführungsbeispiel einer Dichtungsinnenmanschette ausschnittsweise dargestellt. Die Darstellung entspricht mit einem Unterschied der Ausführungsform von Figur 6. Der Unterschied besteht darin, dass zwischen den beiden Zahnstangen 20 ein Schlitz bzw. Spalt 100 vorgesehen ist, welcher ausgehend von dem einen Ende der beiden Zahnstangen 20 bis zum anderen Ende der Zahnstange reicht und noch weiter bis zum Ende des außen liegenden Bandteiles 3 ragt. Dieser Spalt bzw. Schlitz 100 ermöglicht es, dass ein Verwinden der Dichtungsmanschette beim Spannen ausgeglichen werden kann. Der Spalt bzw. Schlitz 100 ist dabei so breit gestaltet, dass sich bei einem Verwinden der Dichtungsinnenmanschette die entsprechenden Teile des innenliegenden Bandendes 3 nicht überlappen.

Abschließend ist noch anzumerken, dass die dargestellten Zahnräder, also die beiden Spannritzel 31, 32 und die zugehörenden Sperrritzel 41, 42 eine unterschiedlich große Zähnezahl aufweisen können. Zusätzlich können diese Zahnräder auch unterschiedlich hoch bzw. unterschiedlich dick ausgebildet sein. Es liegt aber auch im Rahmen der Erfindung, dass diese Zahnräder sowohl in der Zähnezahl als auch in der Dicke identisch sind.

Zweckmäßigerweise bestehen zumindest die Zahnräder aus Stahl, vorzugsweise V4A-Stahl oder aus Titan. Titan hat den Vorteil, dass es säurebeständig ist. Auch die Niederhalteplatte 70 kann aus diesen Materialien gefertigt sein.

Schließlich ist noch anzumerken, dass die Dichtungsinnenmanschette auf ihrer Außenseite mit einem Schlauch aus gummielastischem Material vollständig umgeben sein kann. Zusätzlich ist es auch möglich, dass die Dichtungsinnenmanschette 1 an der Außenseite mit gummielastischen Dichtungsstreifen verbunden ist. Dies erhöht die Dichtwirkung der Dichtungsinnenmanschette 1, wenn diese an dem abzudichtenden Rohr angelegt ist.

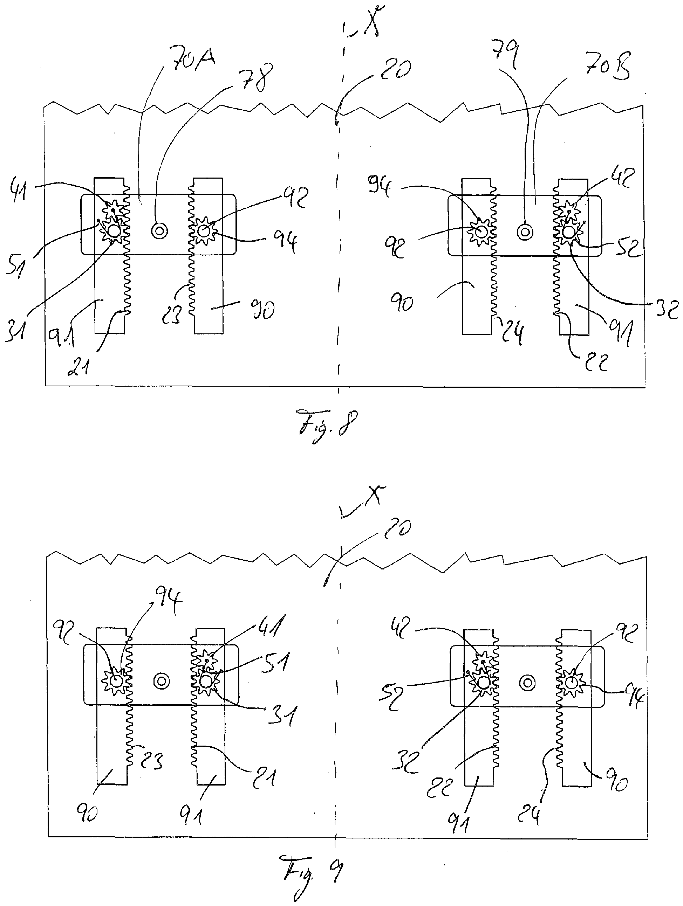

Ein sechstes Ausführungsbeispiel einer Dichtungsinnenmanschette gemäß vorliegender Erfindung ist beispielhaft in Figur 8 im Bereich des Arretierungsmechanismus gezeigt. Die bereits bekannten Bezugszeichen stehen für die gleichen Teile weiter. Der Arretierungsmechanismus sieht jetzt zwei entlang einer Mittellinie X spiegelbildlich zueinander angeordnete Zahnstangen vor, welche jeweils links und rechts von einem Schlitz 90, 91 bei der Draufsicht von Figur 8 auf den linken Teil des Arretierungsmechanismus befindet sich der Schlitz 91 näher am linken Rand des Bandes 20, während der Schlitz 90 näher zur Mittellinie X angeordnet ist und zu dieser Mittellinie X parallel verläuft. Der Schlitz 91 ist zum linken Bandende geradlinig gestaltet und verfügt an seinem zur Mittellinie X zugewandten Seite über eine Zahnreihe 21. Mit dieser Zahnreihe 21 kämmt in der bereits beschriebenen Art und Weise das Spannritzel 31 sowie das Sperrritzel 41. Das Sperrritzel 41 kämmt zudem mit dem Spannritzel 31. Das Federelement ist wiederum mit dem Bezugszeichen 51 markiert. Der rechte Schlitz 90 verfügt zur Mittellinie X hin über einen geraden Verlauf und über eine Zahnreihe 23, die der Zahnreihe 21 zugewandt ist. In dem Schlitz 90 befindet sich ein Bolzen 92, auf dem ein Zahnrad bzw. Ritzel 94 drehbar aufsitzt. Dieses Zahnrad 94 kämmt mit der Zahnreihe 23. Ein Niederhalteelement 70A übergreift in der in Figur 8 dargestellten Art und Weise die Schlitze 90, 91 im Bereich der dort vorgesehenen Spannritzel 31, Sperrritzel 41 und Zahnrad 94. Das Niederhalteelement 70A bringt einen Bolzen 78 wieder feststehend mit dem Band 20 in Verbindung.

In ähnlicher Weise befindet sich spiegelbildlich auf der rechten Seite zur Mittellinie X ein weiterer Arretierungsmechanismus. Die beiden Schlitze 90, 91 verfügen über zueinander zugewandten Zahnreihen 22, 24. In den linken Schlitz von Figur 8 greift ein Bolzen 92, auf dem wiederum ein Zahnrad drehend aufsitzt und mit der Zahnreihe 24 in Eingriff steht. In dem ganz rechts dargestellten Schlitz 91 sitzt in der erwähnten Art und Weise wieder ein Spannritzel 32 und ein Sperrritzel 42, wobei das Sperrritzel 42 über das Federelement 52 an das Spannritzel 32 gedrückt wird. Ein Niederhalteelement 70B übergreift in ähnlicher Weise wie das Niederhalteelement 70A die Schlitze 90, 91 im Bereich der erwähnten Zahnräder bzw. Ritzel. Über einen Bolzen 79 ist das Niederhalteelement 70B mit dem Band 20 feststehend verbunden.

Das in Figur 9 dargestellte Ausführungsbeispiel ähnelt sehr stark dem Ausführungsbeispiel von Figur 8. Allerdings sind die Zahnräder und Ritzel in den Schlitzen 90, 91 zueinander vertauscht angeordnet. Dies bedeutet, dass in Figur 9 in dem links dargestellten Schlitz 90, also dem Schlitz der dem linken Bandende am nächsten liegt, ein Bolzen 92 hineinragt, auf dem ein Zahnrad 94 drehend befestigt ist. Dieses Zahnrad 94 kämmt mit der Zahnreihe 23. Rechts davon befindet sich ein Schlitz 91 mit einer Zahnreihe 21 in die das Spannritzel 31 und das Sperrritzel 41 kämmend eingreift. Auf der rechten Seite zur Mittellinie X in Figur 9 ist eine ähnliche Anordnung mit Spannritzel 32, Sperrritzel 42, Federelement 52 sowie Bolzen 92 und darauf spiegelbildlich platziert.

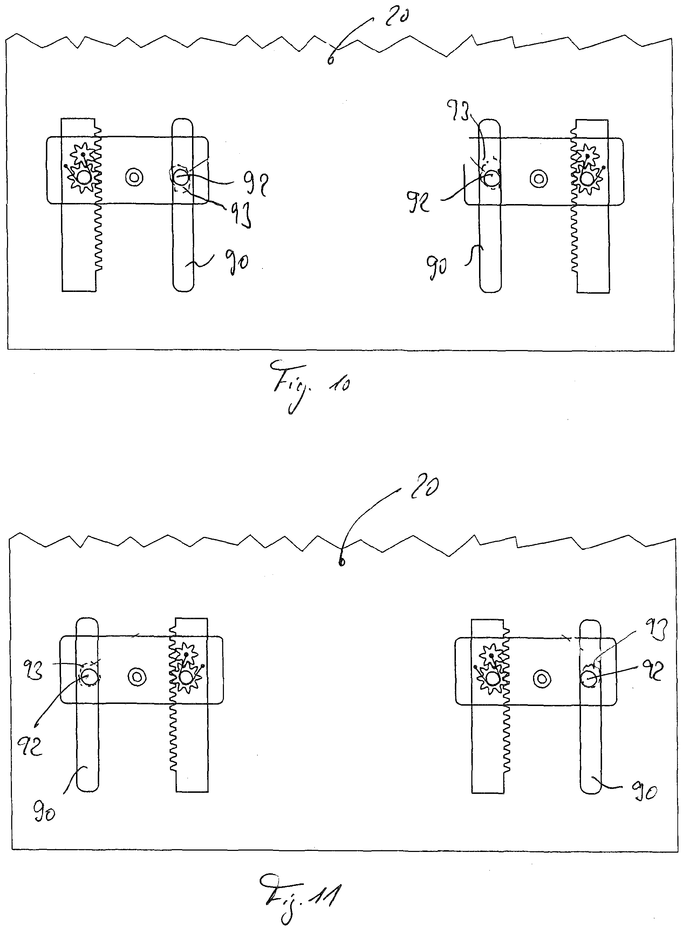

Die Ausführungsbeispiele von Figur 10 und Figur 11 ähneln den Ausführungsbeispielen von Figur 8 und Figur 9. Der einzige Unterschied besteht darin, dass in den Schlitzen 90 jetzt keine Zahnreihe eingearbeitet ist. In diesen Schlitzen ragt vielmehr lediglich ein Bolzen 92, auf dem vorzugsweise eine drehbare Scheibe 93 platziert ist. Diese drehbare Scheibe 93 stützt sich an einer Kante im Schlitz 90 ab.

### Bezugszeichenliste

- 1: Dichtungsinnenmanschette
- 2: Band
- 2A: stirnseitiges Band
- 3: innen liegendes Bandteil, Bandende
- 4: außen liegendes Bandteil, Bandende

- 10: Arretierungsvorrichtung

- 20: Zahnstange
- 21: erste Zahnreihe
- 22: zweite Zahnreihe
- 24: erste Längskante
- 25: zweite Längskante

- 31: erstes Spannritzel
- 32: zweites Spannritzel

- 41: erstes Sperrelement
- 42: zweites Sperrelement
- 43: Bohrung
- 44: Bohrung

- 34: Achsstift
- 35: Achsstift

- 51: erstes Federelement
- 52: zweites Federelement

- 70: Niederhalteplatte
- 70A: Niederhalteplatte
- 70B: Niederhalteplatte
- 70C: Abprägung

- 71: Bohrung
- 72: Bohrung
- 74: Niederhalteelement

- 78: Bolzen
- 79: Bolzen

- 81: erste Ausnehmung
- 81a: gerade Längskante
- 82: zweite Ausnehmung
- 82b: Querkante
- 82c: Querkante

- 90: Schlitz
- 91: Schlitz
- 92: Bolzen+
- 93: Scheibe, drehbares Element
- 94: Zahnrad

- 100: Spalt am innenliegenden Bandende 3

- A: erster Bereich
- B: zweiter Bereich

- P1: Pfeil
- P2: Pfeile

- 2A: Rand

- I-I: Schnittlinie

- X: Mittellinie

## Patentansprüche

1. Dichtungsinnenmanschette (1) zum Einsetzen in Rohre, um dort die Leckstellen abzudichten, mit einem ringförmig zusammengebogenen und aufweitbaren Band (2), vorzugsweise aus Stahlblech, dessen Bandteile (3, 4) sich in Umfangsrichtung mindestens teilweise überlappen und mit einer Arretierungsvorrichtung (10), welche mindestens zwei parallel zueinander angeordnete Zahnreihen (21, 22) aufweist, wobei in mindestens zwei der Zahnreihen (21, 22) ein eigenes Spannritzel (31, 32) eingreift,
**dadurch gekennzeichnet, dass**
jedem der mindestens zwei Spannritzel (31, 32) ein eigenes Sperrritzel (41, 42) zugeordnet ist, welches über jeweils ein Federelement (51, 52) gegen das zugehörende Spannritzel (31, 32) drückt und mit diesem in Eingriff steht, und wobei jedes der Sperrritzel (41, 42) zusätzlich auch mit der zugeordneten Zahnreihe (21, 22) in Eingriff steht.

2. Dichtungsinnenmanschette (1) nach Anspruch 1,
**dadurch gekennzeichnet, dass**
in jede der mindestens zwei Zahnreihen (21, 22) eines der Spannritzel (31, 32) eingreift.

3. Dichtungsinnenmanschette (1) nach Anspruch 1 oder 2,
**dadurch gekennzeichnet, dass** zwei
Zahnreihen (21, 22) an gegenüberliegenden Längskanten (24, 25) einer am innenliegenden Bandteil (2) ausgebildeten Zahnstange (20) angeordnet sind.

4. Dichtungsinnenmanschette (1) nach einem der Ansprüche 1 bis 3,
**dadurch gekennzeichnet, dass**
jedes der Sperrritzel (41, 42) eine geringere Zähnezahl als das zugehörende Spannritzel (31, 32) aufweist.

5. Dichtungsinnenmanschette (1) nach einem der Ansprüche 1 bis 4,
**dadurch gekennzeichnet, dass**
jedes der Federelemente (51, 52) eine Spannfeder ist, welche einenends direkt oder indirekt am außen liegenden Bandteil (4) festgelegt und andernends in einem Achsbereich des zugeordneten Sperrritzels (41, 42) eingesetzt ist.

6. Dichtungsinnenmanschette (1) nach Anspruch 5,
**dadurch gekennzeichnet, dass**
die beiden Spannritzel (31, 32) jeweils über einen eigenen Achsstift (34, 35) am außen liegenden Bandteil (4) festgelegt sind und die zugehörenden Federelemente (51, 52) diese Achsstifte (34, 35) jeweils mindestens teilweise umschlingen.

7. Dichtungsinnenmanschette (1) nach einem der Ansprüche 1 bis 6,
**dadurch gekennzeichnet , dass** zwei gegenüberliegende Zahnreihen (21, 22) der Zahnstange (20) jeweils zu einer längsförmigen ersten Ausnehmung (81) und einer längsförmigen zweiten Ausnehmung (82) gehören, welche zueinander parallel verlaufen.

8. Dichtungsinnenmanschette (1) nach Anspruch 7,
**dadurch gekennzeichnet, dass**
die beiden Ausnehmungen (81, 82) jeweils als Schlitze ausgebildet sind.

9. Dichtungsinnenmanschette (1) nach Anspruch 8,
**dadurch gekennzeichnet, dass**
mindestens eine der Ausnehmungen (82) von einer Zahnreihe (22) der Zahnstange (20) bis zu einem stirnseitigen Ende (2A) des Bandes (2) reicht.

10. Dichtungsinnenmanschette (1) nach einem der Ansprüche 1 bis 9,
**dadurch gekennzeichnet, dass**
jedes der Sperrelemente bzw. Sperrritzel (41, 42) fliegend gelagert ist.

11. Dichtungsinnenmanschette (1) nach einem der Ansprüche 1 bis 10,
**dadurch gekennzeichnet, dass**
eine Niederhalterplatte (70) vorgesehen ist, welche am außen liegenden Bandteil (4) befestigt ist und mindestens eine der beiden Zahnreihen (21, 22) mit zugehörendem Spannritzel (31, 32) und Sperrelement (41, 42) übergreift.

12. Dichtungsinnenmanschette (1) nach Anspruch 11,
**dadurch gekennzeichnet, dass**
die Niederhalteplatte (70) auf der der Zahnstange (20) zugeordneten Seite ein Niederhalteelement (74), insbesondere einen Niederhaltebolzen, aufweist, um die Zahnstange (20) in Richtung außen liegendes Bandteil (4) zu drücken.

13. Dichtungsinnenmanschette (1) nach einem der Ansprüche 11 oder 12,
**dadurch gekennzeichnet, dass**
die Achsstifte (34, 35) der beiden Spannritzel (31, 32) als Schrauben oder Nieten ausgebildet sind, welche jeweils durch entsprechende Bohrungen (76, 77) der Niederhalteplatte (70) ragen.

14. Dichtungsinnenmanschette (1) nach einem der Ansprüche 11-13,
**dadurch gekennzeichnet, dass**
die Niederhalteplatte (70) mindestens einen Teil der beiden Zahnreihen (21, 22) sowie die zugehörenden Spannritzel (31, 32) und Sperrelemente (41, 42) übergreift.

15. Dichtungsinnenmanschette (1) nach einem der vorangegangenen Ansprüche,
**dadurch gekennzeichnet, dass**
zwei Niederhalteplatten (70, 70A; 70B, 70C) vorgesehen sind.

16. Dichtungsinnenmanschette nach Anspruch 15,
**dadurch gekennzeichnet, dass**
jede der zwei Niederhalteplatten (70) zusätzlich einen parallel zur jeweiligen Zahnreihe (21, 22) verlaufenden Schlitz übergreift, in welchem ein feststehender Bolzen sitzt.

17. Dichtungsinnenmanschette (1) nach Anspruch 1,
**dadurch gekennzeichnet, dass** zwei
Zahnreihen (21, 22) jeweils ein gegenüberliegender Schlitz (90) zugeordnet ist, in welchen ein Bolzen (92) ragt.

18. Dichtungsinnenmanschette (1) nach Anspruch 17,
**dadurch gekennzeichnet, dass**
auf dem oder an dem Bolzen (92) ein drehbares Element (93), insbesondere eine drehbare Scheibe, sitzt.

19. Dichtungsinnenmanschette (1) nach Anspruch 18,
**dadurch gekennzeichnet, dass**
auf dem Bolzen (92) ein Zahnrad (94) sitzt, welches mit einer weiteren, im Schlitz (90) angeordneten Zahnreihe (23) kämmt.

## Claims

1. Seal gasket inner sleeve (1) for insertion into pipes, in order to seal up points of leakage in them, having a circular, inward curving and expandable strap (2), preferably made of sheet steel, whose strap parts (3, 4) overlap at least partially in a peripheral direction, and having a locking device (10) which has at least two rows of teeth (21, 22) arranged parallel to one another, wherein a separate tension sprocket (31, 32) engages with at least two of the rows of teeth (21, 22),
**characterised in that**
a separate locking sprocket (41, 42) is assigned to each of the at least two tension sprockets (31, 32), the locking sprocket pressing against the associated tension element (31, 32) via a respective spring element (51, 52), and engaging with this, and wherein each of the locking sprockets (41, 42) additionally engages with the assigned row of teeth (21, 22) as well.

2. Seal gasket inner sleeve (1) according to claim 1,
**characterised in that**
one of the tension sprockets (31, 32) engages with each of the at least two rows of teeth (21, 22).

3. Seal gasket inner sleeve (1) according to claim 1 or 2,
**characterised in that** two rows of teeth (21, 22) are arranged on opposing longitudinal edges (24, 25) of a rack (20) formed on an inlying strap part (2).

4. Seal gasket inner sleeve (1) according to one of claims 1 to 3,
**characterised in that**
each of the locking sprockets (41, 42) has a smaller number of teeth than the associated tension sprocket (31, 32).

5. Seal gasket inner sleeve (1) according to one of claims 1 to 4,
**characterised in that**
each of the spring elements (51, 52) is a tension spring which is fixed directly or indirectly at one end on to the strap part (4) on the outside and at the other end inserted into a shaft area of the assigned locking sprocket (41, 42).

6. Seal gasket inner sleeve (1) according to claim 5,
**characterised in that**
the two tension sprockets (31, 32) are each fixed on to the strap part (4) on the outside via a separate axial pin (34, 35) and the associated spring elements (51, 52) each at least partially twine around these axial pins (34, 35).

7. Seal gasket inner sleeve (1) according to one of claims 1 to 6,
**c h a r a c t e r i s e d i n** that two opposing rows of teeth (21, 22) of the rack (20) belong respectively to a longitudinally shaped first recess (81) and a longitudinally shaped second recess (82), which run parallel to each other.

8. Seal gasket inner sleeve (1) according to claim 7,
**characterised in that**
the two recesses (81, 82) are each formed as slots.

9. Seal gasket inner sleeve (1) according to claim 8,
**characterised in that**
at least one of the recesses (82) reaches from a row of teeth (22) of the rack (20) to an end (2A) on the front side of the strap (2).

10. Seal gasket inner sleeve (1) according to one of claims 1 to 9,
**characterised in that**
each of the locking elements or locking sprockets (41, 42) is mounted overhung.

11. Seal gasket inner sleeve (1) according to one of claims 1 to 10,
**characterised in that**
a low holding plate (70) is provided, which is attached to the strap part (4) on the outside and overlaps with at least one of the two rows of teeth (21, 22) having an associated tension sprocket (31, 32) and locking element (41, 42).

12. Seal gasket inner sleeve (1) according to claim 11,
**characterised in that**
the low holding plate (70) has a low holding element (74) on the side assigned to the rack (20), in particular a low holding bolt, in order to press the rack (20) in the direction of the outer strap part (4).

13. Seal gasket inner sleeve (1) according to one of claims 11 or 12,
**characterised in that**
the axial pins (34, 35) of the two tension sprockets (31, 32) are formed as screws or rivets, which each protrude through corresponding drilled holes (76, 77) of the low holding plate (70).

14. Seal gasket inner sleeve (1) according to one of claims 11-13,
**characterised in that**
the low holding plate (70) overlaps with at least one part of the two rows of teeth (21, 22), as well as the associated tension sprockets (31, 32) and locking elements (41, 42).

15. Seal gasket inner sleeve (1) according to one of the preceding claims,
**characterised in that**
two low holding plates (70, 70A; 70B, 70C) are provided.

16. Seal gasket inner sleeve (1) according to claim 15,
**characterised in that**
each of the two low holding plates (70) additionally overlaps with a slot running parallel to the respective row of teeth (21, 22), in which slot a fixed bolt is positioned.

17. Seal gasket inner sleeve (1) according to claim 1,
**characterised in that** a slot (90) is assigned to two rows of teeth (21, 22) each opposing it, into which slot a bolt (92) protrudes.

18. Seal gasket inner sleeve according to claim 17,
**characterised in that**
a rotatable element (93), in particular a rotatable washer, is positioned on or on top of the bolt (92).

19. Seal gasket inner sleeve (1) according to claim 18,
**characterised in that**
a gear (94) is positioned on the bolt (92), said gear combing with a further row of teeth (23) arranged in the slot (90).

## Revendications

1. Manchon interne de garniture d'étanchéité (1) destiné à être introduit dans des tubes pour réaliser l'étanchéité d'emplacements de fuite, comprenant une bande (2), de préférence en tôle d'acier repliée sur elle-même en forme d'anneau et pouvant être étirée, dont les parties (3, 4) se chevauchent au moins partiellement en direction périphérique, ainsi qu'un dispositif de blocage (10) qui comporte au moins deux rangées de dents (21, 22) parallèles, et, un pignon de serrage (31, 32) particulier, venant en prise dans au moins deux des rangées de dents (21, 22), **caractérisé en ce qu'**
à chacun des pignons de serrage (31, 32) est associé un pignon de blocage (41, 42) particulier, qui s'appuie par l'intermédiaire d'un élément élastique (51, 52) respectif contre le pignon de serrage (31, 32) associé, et vient en prise avec celui-ci, chacun des pignons de blocage (41, 42) étant en outre également en prise avec la rangée de dents (21, 22) associées.

2. Manchon interne de garniture d'étanchéité (1) conforme à la revendication 1,
**caractérisé en ce que**
dans chacune des rangées de dents (21, 22) vient en prise l'un des pignons de serrage (31, 32).

3. Manchon interne de garniture d'étanchéité (1) conforme à la revendication 1 ou 2,
**caractérisé en ce que**
deux rangées de dents (21, 22) sont installées sur les bords longitudinaux opposés (24, 25) d'une crémaillère (20) réalisée sur la partie de bande interne (2).

4. Manchon interne de garniture d'étanchéité (1) conforme à l'une des revendications 1 à 3,
**caractérisé en ce que**
chacun des pignons de blocage (41, 42) a un nombre de dents inférieur à celui du pignon de serrage (31, 32) associé.

5. Manchon interne de garniture d'étanchéité (1) conforme à l'une des revendications 1 à 4,
**caractérisé en ce que**
chacun des éléments élastiques (51, 52) est un ressort de tension qui est fixé à l'une de ses extrémités directement ou indirectement sur la partie de bande externe (4) et est monté à son autre extrémité dans la zone axiale du pignon de blocage (41, 42) associée.

6. Manchon interne de garniture d'étanchéité (1) conforme à la revendication 5,
**caractérisé en ce que**
les deux pignons de serrage (31, 32) sont respectivement fixés par l'intermédiaire d'une tige axiale propre (34, 35) sur la partie de bande externe (4), et les éléments élastiques (51, 52) associés entourent respectivement au moins partiellement cette tige axiale (34, 35).

7. Manchon interne de garniture d'étanchéité (1) conforme à l'une des revendications 1 à 6,
**caractérisé en ce que**
deux rangées de dents opposées (21, 22) de la crémaillère (20) appartiennent respectivement à un premier évidement longitudinal (81) et à un second évidement longitudinal (82) qui s'étendent parallèlement.

8. Manchon interne de garniture d'étanchéité (1) conforme à la revendication 7,
**caractérisé en ce que**
les deux évidements (81, 82) sont respectivement réalisés sous la forme de fentes.

9. Manchon interne de garniture d'étanchéité (1) conforme à la revendication 8,
**caractérisé en ce qu'**
au moins l'un des évidements (82) s'étend de l'une des rangées de dents (22) de la crémaillère (20) jusqu'à une extrémité frontale (2A) de la bande (2).

10. Manchon interne de garniture d'étanchéité (1) conforme à l'une des revendications 1 à 9,
**caractérisé en ce que**
chacun des éléments de blocage ou pignons de blocage (41, 42) est monté flottant.

11. Manchon interne de garniture d'étanchéité (1) conforme à l'une des revendications 1 à 10,
**caractérisé en ce qu'**
il est prévu une plaque de maintien (70) qui est fixée à la partie de bande externe (4) et vient en prise sur au moins l'une des deux rangées de dents (21, 22) avec le pignon de serrage (31, 32) et l'élément de blocage (41, 42) associés.

12. Manchon interne de garniture d'étanchéité (1) conforme à la revendication 11,
**caractérisé en ce que**
la plaque de maintien (70) comporte, sur sa face associée à la crémaillère (20), un élément de maintien (74) en particulier un boulon de maintien pour pouvoir pousser la crémaillère (20) en direction de la partie de bande externe (4).

13. Manchon interne de garniture d'étanchéité (1) conforme à l'une des revendications 11 et 12,
**caractérisé en ce que**
les tiges axiales (34, 35) des deux pignons de serrage (31, 32) sont réalisées sous la forme de vis ou de rivets qui pénètrent respectivement au travers de perçages correspondant (76, 77) de la plaque de maintien (70).

14. Manchon interne de garniture d'étanchéité (1) conforme à l'une des revendications 11 à 13,
**caractérisé en ce que**
la plaque de maintien (70) vient en prise sur au moins une partie des deux rangées de dents (21, 22) ainsi que sur les pignons de serrage (31, 32) et les éléments de blocage (41, 42) associés.

15. Manchon interne de garniture d'étanchéité (1) conforme à l'une des revendications précédentes,
**caractérisé en ce qu'**
il est prévu deux plaques de maintien (70, 70A ; 70B, 70C).

16. Manchon interne de garniture d'étanchéité conforme à la revendication 15,
**caractérisé en ce que**
chacune des deux plaques de maintien (70) vient en outre en prise sur une fente s'étendant parallèlement aux rangées de dents (21, 22) respectives dans laquelle est logé un boulon fixe.

17. Manchon interne de garniture d'étanchéité (1) conforme à la revendication 1,
**caractérisé en ce qu'**
à chacune des deux rangées de dents (21, 22) est respectivement associée une fente (90) opposée dans laquelle pénètre un boulon (92).

18. Manchon interne de garniture d'étanchéité (1) conforme à la revendication 17,
**caractérisé en ce que**
sur le boulon (92) est monté un élément mobile en rotation (93), en particulier un disque mobile en rotation.

19. Manchon interne de garniture d'étanchéité (1) conforme à la revendication 18,
**caractérisé en ce que**
sur le boulon (92) est montée une roue dentée (94) qui engrène avec une autre rangée de dents (23) située dans la fente (90).
